# EUROPEAN PATENT APPLICATION

(11) **EP 4 311 282 A1**
(43) Date of publication of application: **24.01.2024**
(21) Application number: 22794554.0
(22) Date of filing: 08.04.2022
(51) Int. Cl.: H04W 4/70, H04W 4/80, H04W 56/00, H04W 76/14, H04W 76/15

(54) **METHOD FOR ESTABLISHING CONNECTION BETWEEN MULTIPLE DEVICES, AND DEVICE**

(30) Priority: 30.04.2021 CN 202110478504
(71) Applicant: HUAWEI TECHNOLOGIES CO., LTD., Shenzhen Guangdong 518129 (CN)
(72) Inventor: ZHANG, Li, Shenzhen, Guangdong 518129 (CN); YANG, Jianhua, Shenzhen, Guangdong 518129 (CN); CHEN, Wang, Shenzhen, Guangdong 518129 (CN); MENG, Meng, Shenzhen, Guangdong 518129 (CN); XIA, Jikang, Shenzhen, Guangdong 518129 (CN); GU, Yanjie, Shenzhen, Guangdong 518129 (CN); LIAO, Xin, Shenzhen, Guangdong 518129 (CN)
(74) Representative: Körber, Martin Hans
(86) International application number: PCT/CN2022/085797
(87) International publication number: WO 2022/228083

(57) **Abstract**

This application discloses a multi-device connection establishment method and a device. The method includes: A first device sends a first message, where the first message is used to discover another device; the first device receives one or more second messages from one or more devices, where the second message is a response message for the first message; the first device determines, based on the one or more second messages, to establish a connection to a second device in the one or more devices; and the first device negotiates, with the second device, link information used to establish direct communication between the first device and the second device, and establishes a direct communication connection to the second device based on the link information. After a communication connection is established between devices based on discovery, link information is negotiated, and direct communication is established based on the link information, to form a system. In this way, there is no need to allocate specific roles to the devices. Therefore, the roles of the devices in the established distributed system are equivalent, and a service is not limited to a role problem.

## Description

### CROSS-REFERENCE TO RELATED APPLICATIONS

This application claims priority to Chinese Patent Application No. 202110478504.4, filed with the China National Intellectual Property Administration on April 30, 2021 and entitled "MULTI-DEVICE CONNECTION ESTABLISHMENT METHOD AND DEVICE", which is incorporated herein by reference in its entirety.

### TECHNICAL FIELD

This application relates to the field of communication technologies, and in particular, to a multi-device connection establishment method and a device.

### BACKGROUND

With development of intelligent terminals, there are increasingly more scenarios in which a user has a plurality of intelligent terminals, for example, devices such as a smartphone, a tablet computer, or a personal computer. Interconnection between a plurality of devices brings good user experience. To improve user experience, a multi-screen collaboration function (or referred to as a multi-device collaboration function) is provided, to support an application and a service of multi-device collaborative work, for example, multi-screen collaboration and information sharing. It should be understood that, for the multi-device collaborative work, a plurality of terminal devices such as a mobile phone, a tablet computer, a PC, and a display screen need to be connected together, that is, a plurality of devices are interconnected, to transmit service data between the plurality of terminal devices.

Currently, data transmission between the plurality of interconnected devices is based on a Wi-Fi P2P protocol. However, the Wi-Fi P2P protocol is developed based on an 802.11 protocol framework, and belongs to a centralized network communication structure. In other words, Wi-Fi P2P requires that each terminal device needs to be configured with a role, for example, may be a group owner (group owner, GO) or a group client (group client, GC). As a central node, the GO can communicate with any GC node connected to the GO. However, GOs cannot communicate with each other, and GCs cannot communicate with each other. However, a service that needs to be collaborated may exist in any two of the plurality of interconnected devices, for example, between a GC and another GC. It is clearly that multi-device interconnection implemented based on the Wi-Fi P2P protocol limits an actual application requirement of a distributed service.

### SUMMARY

This application provides a multi-device connection establishment method and a device, so that roles of a plurality of interconnected devices are equivalent, and a distributed service is not limited to the roles of the devices.

According to a first aspect, a multi-device connection establishment method. The method is applied to any one of a plurality of devices. The plurality of devices are connected to form a system. For example, the plurality of devices include a first device, a second device, and more devices. The following uses an example in which the method is executed by the first device. The method includes:
a first device sends a first message, where the first message is used to discover another device; the first device receives one or more second messages from one or more devices, where the second message is a response message for the first message; the first device determines, based on the one or more second messages, to establish a connection to a second device in the one or more devices; and the first device negotiates, with the second device, link information used to establish direct communication between the first device and the second device, and establishes a direct communication connection to the second device based on the link information.

In this embodiment of this application, the first device may send the first message used to discover another device nearby, and any device nearby the first device may feed back the second message to the first device after listening to the first message. The first device selects, based on the one or more received second messages, a device that can support a service to be performed by the first device, and establishes a communication connection to the selected device. Then, the first device may negotiate link information with the connected device, and establish direct communication with the selected device based on the link information, to form a distributed system. There is no need to allocate specific roles to the devices. Therefore, the roles of the devices in the established distributed system are equivalent, and a service is not limited to a role problem.

In a possible implementation, the second message includes service capability information, the service capability information indicates whether a device can support the service to be performed by the first device. That the first device determines, based on the one or more second messages, to establish a connection to a second device includes:
the first device obtains service capability information respectively carried in the one or more second messages, determines, from the one or more devices based on the obtained service capability information, that a device that can support the service to be performed by the first device is the second device, and establishes the connection to the second device. It may be understood that a device in a plurality of devices nearby the first device may not support the service to be performed by the first device. If the first device establishes a connection to the device, it is clearly unnecessary. Therefore, in this solution, the first device may determine in advance a device that is in the devices nearby the first device and that supports the service to be performed by the first device, to reduce an unnecessary connection process.

In a possible implementation, the method further includes:
the first device sends a ranking priority (ranking priority, RP) of the first device, where the RP may indicate a priority of the first device and is used to determine a primary device in the system, and a device other than the primary device in the system is a secondary device; and the first device receives a respective RP from the one or more devices, and determines the primary device based on the one or more received RPs. It may be understood that time synchronization is required for a service between the devices in the system. However, roles of the devices in the system established based on the method provided in this embodiment of this application are equivalent. Therefore, the primary device needs to be selected for time synchronization of the secondary device, to ensure normal running of the service between the devices. In this solution, each device reports a respective RP, and each device can ensure that the determined primary device is consistent based on RPs of the devices in the system.

In a possible implementation, the RP includes a first part and a second part. The first part indicates identity information of the first device, and the second part indicates priority information of the first device. The priority information includes one or more of the following types of information: a device level, a protocol version number of a device, or a quantity of devices connected to a device, where the device level includes one or more of a device type, an endurance capability of a device, and a hardware capability of a device. A specific implementation form of the priority information of the device is not limited in this embodiment of this application. For example, the foregoing types of priority information are included, which is relatively flexible. A plurality of types of priority information can ensure accuracy of the determined primary device as soon as possible.

In a possible implementation, the first device determines the primary device according to a preset rule and based on the one or more received RPs. The preset rule meets:
if a device type of the first device is higher than a device type of the second device, the first device is a primary device, and the second device is a secondary device;
if a device type of the first device is the same as a device type of the second device, and an endurance capability of the first device is higher than an endurance capability of the second device, the first device is a primary device, and the second device is a secondary device;
if a device type of the first device is the same as a device type of the second device, an endurance capability of the first device is the same as an endurance capability of the second device, and a hardware capability of the first device is higher than a hardware capability of the second device, the first device is a primary device, and the second device is a secondary device;
if a device type of the first device is the same as a device type of the second device, an endurance capability of the first device is the same as an endurance capability of the second device, a hardware capability of the first device is the same as a hardware capability of the second device, and a protocol version of the first device is higher than a protocol version of the second device, the first device is a primary device, and the second device is a secondary device;
if a device type of the first device is the same as a device type of the second device, an endurance capability of the first device is the same as an endurance capability of the second device, a hardware capability of the first device is the same as a hardware capability of the second device, a protocol version of the first device is the same as a protocol version of the second device, and a quantity of devices connected to the first device is greater than a quantity of devices connected to the second device, the first device is a primary device, and the second device is a secondary device; or
if a device type of the first device is the same as a device type of the second device, an endurance capability of the first device is the same as an endurance capability of the second device, a hardware capability of the first device is the same as a hardware capability of the second device, a protocol version of the first device is the same as a protocol version of the second device, a quantity of devices connected to the first device is the same as a quantity of devices connected to the second device, and bit-wise comparison of MAC addresses shows that a MAC address of the first device is higher than a MAC address of the second device, the first device is a primary device, and the second device is a secondary device.

In this embodiment of this application, after the plurality of devices are connected, to subsequently perform a service, each secondary device may perform time synchronization with the primary device. The following shows two synchronization manners: an active synchronization manner and a passive synchronization manner. In the passive synchronization manner, the primary device actively notifies time, and the secondary device performs synchronization based on the time of the primary device. In the active synchronization manner, the secondary device actively requests time synchronization.

In a possible implementation, the first device is the primary device, and the method further includes: The first device periodically sends a time synchronization frame, where the time synchronization frame carries time information used for time synchronization between secondary devices and a basic service set identifier (basic service set identifier, BSSID), and the BSSID indicates identity information of the system in which the plurality of devices are located. This solution is passive time synchronization. After receiving the time synchronization frame, any secondary device can perform time synchronization with the primary device. This facilitates normal running of a service between any devices.

In a possible implementation, the first device is the secondary device, and the method further includes:
the first device broadcasts a time synchronization request message, where the time synchronization request message is used to request to perform time synchronization with a device that completes time synchronization in the system in which the plurality of devices are located; the first device receives a response message from a third device, where the response message carries time information and a time domain location of the third device, and the time domain location indicates a time domain location at which the plurality of devices exchange information in a mutual discovery process; and the first device completes time pre-synchronization based on the time information in the response message, and listens to, at the time domain location, an action signaling frame from the third device, to complete final synchronization. This solution is active time synchronization. There is no need to wait for the primary device to send a time synchronization frame, and synchronization with the primary device can be completed in advance, to reduce a synchronization delay.

According to a second aspect, an electronic device is provided. The electronic device includes a display screen, one or more processors, a memory, a transceiver, and one or more programs. The one or more programs are stored in the memory, the one or more programs include instructions, and when the instructions are executed by the electronic device, the electronic device is enabled to perform the method performed by the first device according to any one of the first aspect or the possible implementations.

For example, the transceiver is configured to: send a first message, and receive one or more second messages from one or more devices, where the first message is used to discover another device, and the second message is a response message for the first message.

When the at least one processor executes the instructions, the electronic device performs the following steps: determining, based on the one or more second messages, to establish a connection to a second device in the one or more devices; and negotiating, with the second device, link information used to establish direct communication between the electronic device and the second device, and establishing a direct communication connection to the second device based on the link information.

In an optional implementation, the second message includes service capability information, the service capability information indicates whether a device can support a service to be performed by the electronic device. The processor is specifically configured to: obtain service capability information respectively carried in the one or more second messages; determine, from the one or more devices based on the obtained service capability information, that a device that can support the service to be performed by the electronic device is the second device; and determine to establish the connection to the second device.

In an optional implementation, the transceiver is further configured to:
send a ranking priority RP of the electronic device, where the RP may indicate a priority of the electronic device and is used to determine a primary device in a system in which the electronic device is located, and a device other than the primary device in the system is a secondary device; and
receive a respective RP from the one or more devices, and determine the primary device based on the one or more received RPs.

In an optional implementation, the RP includes a first part and a second part. The first part indicates identity information of the electronic device, and the second part indicates priority information of the electronic device. The priority information includes one or more of the following types of information:
a device level, a protocol version number of a device, or a quantity of devices connected to a device, where the device level includes one or more of a device type, an endurance capability of a device, and a hardware capability of a device.

In an optional implementation, the processor is specifically configured to determine the primary device according to a preset rule and based on the one or more received RPs. The preset rule meets:
if a device type of the electronic device is higher than a device type of the second device, the electronic device is a primary device, and the second device is a secondary device;
if a device type of the electronic device is the same as a device type of the second device, and an endurance capability of the electronic device is higher than an endurance capability of the second device, the electronic device is a primary device, and the second device is a secondary device;
if a device type of the electronic device is the same as a device type of the second device, an endurance capability of the electronic device is the same as an endurance capability of the second device, and a hardware capability of the electronic device is higher than a hardware capability of the second device, the electronic device is a primary device, and the second device is a secondary device;
if a device type of the electronic device is the same as a device type of the second device, an endurance capability of the electronic device is the same as an endurance capability of the second device, a hardware capability of the electronic device is the same as a hardware capability of the second device, and a protocol version of the electronic device is higher than a protocol version of the second device, the electronic device is a primary device, and the second device is a secondary device;
if a device type of the electronic device is the same as a device type of the second device, an endurance capability of the electronic device is the same as an endurance capability of the second device, a hardware capability of the electronic device is the same as a hardware capability of the second device, a protocol version of the electronic device is the same as a protocol version of the second device, and a quantity of devices connected to the electronic device is greater than a quantity of devices connected to the second device, the electronic device is a primary device, and the second device is a secondary device; or
if a device type of the electronic device is the same as a device type of the second device, an endurance capability of the electronic device is the same as an endurance capability of the second device, a hardware capability of the electronic device is the same as a hardware capability of the second device, a protocol version of the electronic device is the same as a protocol version of the second device, a quantity of devices connected to the electronic device is the same as a quantity of devices connected to the second device, and bit-wise comparison of MAC addresses shows that a MAC address of the electronic device is higher than a MAC address of the second device, the electronic device is a primary device, and the second device is a secondary device.

In an optional implementation, the electronic device is the primary device, and the transceiver is further configured to:
periodically send a time synchronization frame, where the time synchronization frame carries time information used for time synchronization between secondary devices and a BSSID, and the BSSID indicates identity information of a system in which the plurality of devices are located.

In an optional implementation, the electronic device is the secondary device, and the transceiver is further configured to:
broadcast a time synchronization request message, where the time synchronization request message is used to request to perform time synchronization with a device that completes time synchronization in the system in which the plurality of devices are located;
receive a response message from a third device, where the response message carries time information and a time domain location of the third device, and the time domain location indicates a time domain location of information exchanged in a mutual discovery process of the plurality of devices; and
complete time pre-synchronization based on the time information in the response message, and listen to, at the time domain location, an action signaling frame from the third device, to complete final synchronization.

For technical effects brought by the second aspect or the optional implementations, refer to the description of the technical effects brought by the first aspect or the corresponding implementations of the first aspect.

According to a third aspect, an electronic device is provided. The electronic device includes a module/unit configured to perform the method performed by the first device according to any one of the first aspect or the possible implementations of the first aspect.

According to a fourth aspect, a system is provided. The system includes a first device, a second device, and a third device. Optionally, the system may further include another device. The device included in the system can implement a distributed service, for example, multi-screen collaboration. Each device may be implemented by the electronic device according to the second aspect or the electronic device according to the third aspect.

According to a fifth aspect, a chip is provided. The chip includes a processor and an interface. The interface is configured to communicate with the processor and receive information from another device. The processor is configured to perform the method according to any one of the first aspect and the possible implementations of the first aspect.

According to a sixth aspect, a computer-readable storage medium is provided. The computer-readable storage medium is configured to store a computer program, and when the computer program is run on a computer, the computer is enabled to perform one or more of the following methods: the method performed by the first device according to any one of the first aspect or the possible implementations of the first aspect.

According to a seventh aspect, a computer program product including instructions is provided. The computer program product is configured to store a computer program, and when the computer program is run on a computer, the computer is enabled to perform one or more of the following methods: the method performed by the first device according to any one of the first aspect or the possible implementations of the first aspect.

According to the technical solutions provided in embodiments of this application, roles of a plurality of interconnected devices can be equivalent, and a distributed service is not limited to the roles of the devices.

### BRIEF DESCRIPTION OF DRAWINGS

FIG. 1 is a schematic diagram of a scenario in which a distributed service is limited due to a role of a terminal device;
FIG. 2 is a schematic diagram of another scenario in which a distributed service is limited due to a role of a terminal device;
FIG. 3 is a schematic diagram of an architecture of an electronic device according to an embodiment of this application;
FIG. 4 is a schematic diagram of an architecture of a distributed system according to an embodiment of this application;
FIG. 5 is a flowchart for multi-device connection establishment according to an embodiment of this application;
FIG. 6 is a frame structure of a first part that carries a ranking priority value; and
FIG. 7 is a schematic diagram of a structure of an electronic device according to an embodiment of this application.

### DESCRIPTION OF EMBODIMENTS

To make the objectives, technical solutions, and advantages of this application clearer, the following further describes this application in detail with reference to the accompanying drawings.

Before this application is described, some terms in embodiments of this application are first briefly explained and described, to facilitate understanding by a person skilled in the art.

An application (application, app) in this application is a software program that can implement one or more specific functions. Usually, a plurality of applications may be installed in an electronic device, for example, a camera application, a short message application, a multimedia message application, an image application, various email applications, WeChat (WeChat), Tencent chat software (QQ), WhatsApp Messenger, Line (Line), Instagram (Instagram), Kakao Talk, or DingTalk. The application mentioned in the following may be an application installed when the electronic device is delivered from the factory, or may be an application downloaded by a user from a network or obtained from another electronic device (for example, an application sent by another electronic device) in a process of using the electronic device.

Information in embodiments of this application is, for example, an application, or a file, for example, a multimedia file. The multimedia file includes, for example, an image file, a video file, or an audio file. Alternatively, the file may include a text file, for example, a Microsoft (Microsoft) Office (office) file, for example, a Word file, an Excel file, or a PowerPoint file. Alternatively, the file may further include a picture file corresponding to a drawing application, for example, a Microsoft Office Visio file or a Photoshop file.

In embodiments of this application, "at least one" means one or more, and "a plurality of" means two or more. "And/Or" is an association relationship for describing associated objects, and indicates that three relationships may exist. For example, A and/or B may indicate the following cases: Only A exists, both A and B exist, and only B exists, where A and B may be in a singular form or a plural form. The character "/" generally indicates an "or" relationship between associated objects. "At least one of the following items (pieces)" or a similar expression thereof means any combination of these items, including any combination of singular items (pieces) or plural items (pieces). For example, at least one of a, b, or c may represent: a, b, c, a and b, a and c, b and c, or a, b, and c, where a, b, and c may be singular or plural.

The terms "include", "contain", "have", and their variants all mean "include but are not limited to", unless otherwise specifically emphasized in another manner.

In addition, unless otherwise stated, ordinal numbers such as "first" and "second" in embodiments of this application are used to distinguish between a plurality of objects, and are not intended to limit sizes, content, orders, time sequences, priorities, importance degrees, or the like of the plurality of objects. For example, a first device and a second device are merely used to distinguish between different files, but do not indicate different sizes, content, priorities, or importance degrees of the two files.

The foregoing describes some terms in embodiments of this application. The following describes technical features in embodiments of this application.

With development of intelligent terminals, there are increasingly more scenarios in which a user has a plurality of intelligent terminals, for example, devices such as a smartphone, a tablet computer (PAD), or a personal computer (PC). Interconnection between a plurality of devices brings good user experience. To improve user experience, a multi-screen collaboration function (or referred to as a multi-device collaboration function) is provided, to support an application and a service of multi-device collaborative work, for example, multi-screen collaboration and information sharing. For example, in the multi-screen collaboration function, a device 1 may perform projection onto a device 2, so that a file on the device 1 may be opened on the device 2. For example, when a mobile phone and a PC perform multi-screen collaboration, a mirror of the mobile phone is displayed on a display screen of the PC, and the mirror of the mobile phone displayed on the PC may also be understood as a projection interface. The user performs an operation on the projection interface on the PC. For example, the user selects to open a file A, and the PC may start the file A, but actually the file A is a file on the mobile phone. Compared with the mobile phone, the PC has a display screen of a larger area. The user can view the file on the PC, to improve a viewing effect of the user.

For ease of description, in embodiments of this application, applications or services that depend on multi-device collaborative work are collectively referred to as distributed services. It should be understood that, to support the distributed service, a plurality of terminal devices, such as a mobile phone, a tablet computer, a PC, and a display screen need to be connected together, that is, a plurality of devices are interconnected, so that the distributed service is run in the plurality of terminal devices in a collaborative manner.

To support data transmission between a plurality of interconnected devices, the Wi-Fi alliance (Wi-Fi Alliance, WFA) has developed and defined the wireless fidelity peer-to-peer (wireless fidelity Peer-to-Peer, Wi-Fi P2P) protocol. The Wi-Fi P2P protocol is a peer-to-peer connection technology, so that a plurality of Wi-Fi devices can form a network (network) when there is no access point (also referred to as an access point) (access point, AP), and the plurality of Wi-Fi devices in the network can communicate with each other. The network may also be referred to as a P2P network or a P2P group (Group). A general principle of the Wi-Fi P2P protocol is that a transmission control protocol (transmission control protocol, TCP)/internet protocol (internet protocol, IP) link may be directly established between two workstations (also referred to as stations) (Stations, STAs). One of the two STAs may be considered as an AP in a conventional sense, and is referred to as a group owner (group owner, GO). Relatively speaking, the other one of the two STAs may be referred to as a group client (group client, GC). In other words, the GC is similar to the STA, and the GO is similar to the AP. Therefore, similar to that the STA is connected to the AP, the GC may be connected to the GO. It should be understood that one GO in the P2P network or the P2P group may correspond to one GC, or correspond to a plurality of GCs. In other words, there may be a one-to-one relationship or a one-to-many relationship between GOs and GCs.

The Wi-Fi P2P protocol is developed based on an 802.11 protocol framework and belongs to a centralized network communication structure. In other words, Wi-Fi P2P requires that each terminal device needs to be configured with a role, for example, may be GO or GC. As a central node, the GO can communicate with any GC node connected to the GO. However, the GOs cannot communicate with each other, and the GCs cannot communicate with each other. However, the distributed service may exist in any two of the plurality of interconnected devices, for example, between a GC and another GC. It is clearly that multi-device interconnection implemented based on the Wi-Fi P2P protocol limits an actual application requirement of the distributed service.

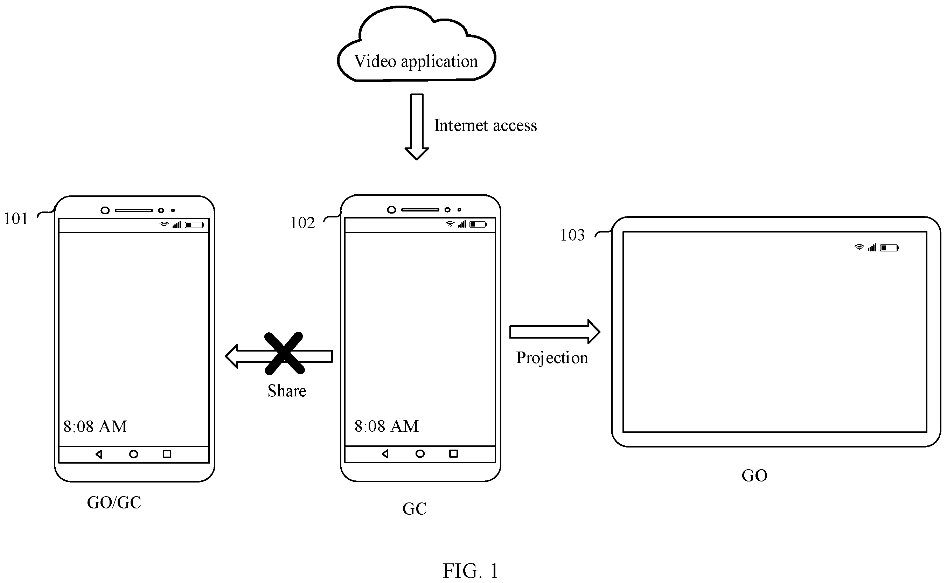

For example, FIG. 1 shows a scenario in which a distributed service is limited due to a role of a terminal device.

In FIG. 1, three terminal devices are included. The three terminal devices are respectively a terminal device 101, a terminal device 102, and a terminal device 103 located in a network. In FIG. 1, an example in which the terminal device 101 and the terminal device 102 are mobile phones, and the terminal device 103 is a PAD is used. In FIG. 1, after the terminal device 101 and the terminal device 102 initially establish links to the terminal device 103, the terminal device 103 is a GO, and both the terminal device 101 and the terminal device 102 are GCs. The terminal device 103 may perform a collaboration service with the terminal device 101, or may perform a collaboration service with the terminal device 102. For example, as shown in FIG. 1, the terminal device 103 and the terminal device 102 may perform a screen projection service. If a service that needs to be collaborated exists in any two of a plurality of interconnected GCs, because the GCs cannot communicate with each other, clearly, a collaboration service cannot be performed. For example, as shown in FIG. 1, information sharing needs to be implemented between the terminal device 101 and the terminal device 102. However, because both the terminal device 101 and the terminal device 102 are GCs, a connection between the terminal device 102 and the terminal device 103 needs to be disconnected due to a limitation of roles played by the terminal device 102 and the terminal device 101. A link between the terminal device 101 and the terminal device 102 is re-established, so that the terminal device 101 is a GO, and information sharing between the terminal device 101 and the terminal device 102 is implemented. Otherwise, the information sharing between the terminal device 102 and the terminal device 101 cannot be implemented. After the link between the terminal device 101 and the terminal device 102 is re-established, one of the terminal device 101 and the terminal device 101 functions as a GO, and the other terminal device functions as a GC. For example, in FIG. 1, the terminal device 101 serves as a GO and the terminal device 102 serves as a GC. In other words, a role of a device may change with a change of link establishment. For example, after the terminal device 101 initially establishes a link, a role of the terminal device 101 is a GC, and after a link is re-established, the role of the terminal device 101 is a GO.

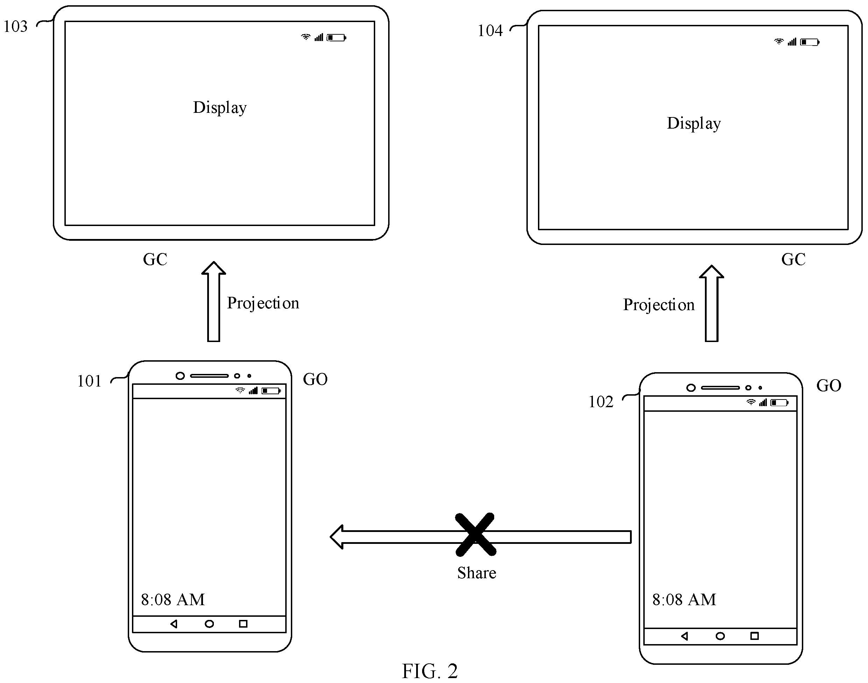

For another example, FIG. 2 shows another scenario in which a distributed service is limited due to a role of a terminal device.

In FIG. 2, four terminal devices are included. The four terminal devices are respectively a terminal device 101 and a terminal device 102 located in a network, a display 103, and a display 104. In FIG. 2, an example in which the terminal device 101 and the terminal device 102 are mobile phones is used. In a possible application scenario, the terminal device 101 and the terminal device 102 may work in a computer mode, which is more convenient. For example, the terminal device 101 may perform projection onto the display 103, and the terminal device 102 may perform projection onto the display 104. In this case, it may be considered that roles played by the terminal device 101 and the terminal device 102 are GOs, and roles played by the display 103 and the display 104 are GCs. However, if information needs to be shared between the terminal device 101 and the terminal device 102, because both the terminal device 101 and the terminal device 102 are GOs, the terminal device 101 and the terminal device 102 cannot share information with each other. In other words, due to a P2P role conflict, a connection between the terminal device 101 and the terminal device 102 cannot be established to complete file transmission. Therefore, the terminal device 101 needs to disconnect from the display 103, the terminal device 102 disconnects from the display 104, and the terminal device 101 and the terminal device 102 re-establish a connection. For example, after the connection between the terminal device 101 and the terminal device 102 is established, the terminal device 101 acts as a GO, and the terminal device 102 acts as a GC. In this case, the information may be shared between the terminal device 101 and the terminal device 102.

It can be learned from FIG. 1 and FIG. 2 that multi-device interconnection implemented based on the Wi-Fi P2P protocol limits the actual application requirement of the distributed service due to a role limitation of link establishment. In view of this, embodiments of this application provide a new multi-device interconnection method. Based on the method, roles of a plurality of interconnected devices can be equivalent, and a distributed service is not limited to the roles of the devices.

The technical solutions provided in embodiments of this application may be applied to an electronic device. In some embodiments of this application, the electronic device may be a portable electronic device, such as a mobile phone, a PAD, a portable computer, a wearable device (such as a smartwatch, smart glasses, a smart band, or a smart helmet) with a wireless communication function, or a vehicle-mounted device. An example embodiment of the portable electronic device includes but is not limited to a portable electronic device using iOS^{®}, Android^{®}, Microsoft^{®}, or another operating system. It should be further understood that, in some other embodiments of this application, the electronic device may not be a portable device, for example, may be a desktop computer such as a PC, may be a television, or may be a device such as a display.

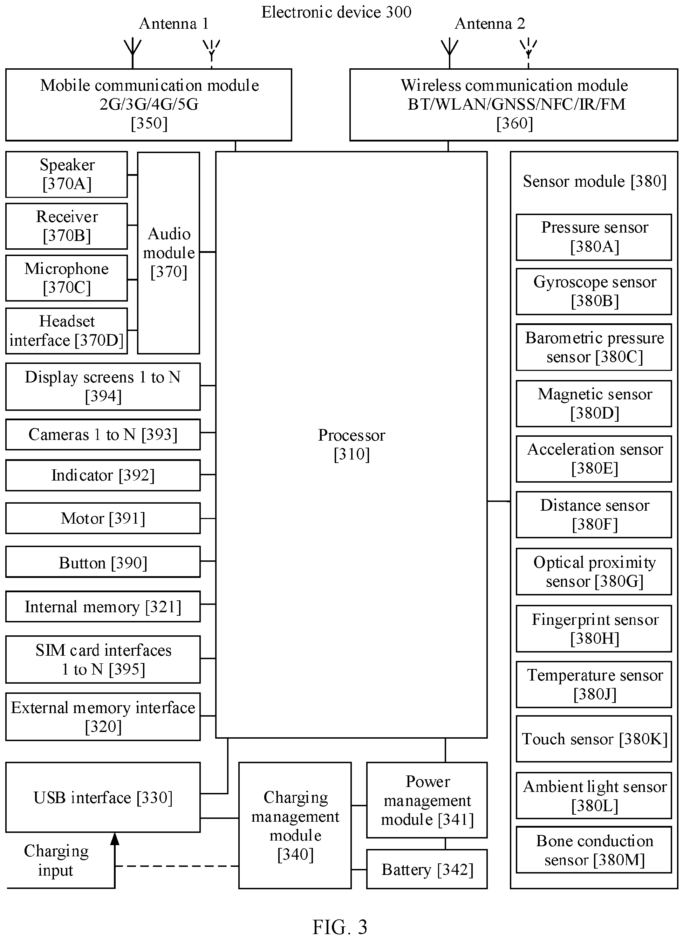

For example, FIG. 3 is a schematic diagram of a structure of an electronic device 300.

It should be understood that the electronic device 300 shown in the figure is merely an example, and the electronic device 300 may have more or fewer components than those shown in the figure, may combine two or more components, or may have different component configurations. Various components shown in the figure may be implemented in hardware including one or more signal processing and/or application-specific integrated circuits, in software, or in a combination of hardware and software.

As shown in FIG. 3, the electronic device 300 may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset interface 370D, a sensor module 380, a button 390, a motor 391, an indicator 392, a camera 393, a display screen 394, a subscriber identification module (subscriber identification module, SIM) card interface 395, and the like. The sensor module 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

The following describes components of the electronic device 300 in detail with reference to FIG. 3.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 300. The controller may generate an operation control signal based on instruction operation code and a time sequence signal, to complete control of instruction reading and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor 310 may directly invoke the instructions or the data from the memory. This avoids repeated access and reduces waiting time of the processor 310, thereby improving efficiency of a system.

The processor 310 may perform an information sharing method provided in embodiments of this application, for example, a fast collaborative service (Fast Collaborative Service) provided in embodiments of this application. The fast collaborative service may be a software module, the software module may run on the processor 310, and the software module may be understood as a computer program. For example, the software module may provide a system-level capability. The Android system is used as an example. From a service perspective, the software module may be placed in a system_server (system _server) process, and modules such as an activity manager service (activity manager service, AMS), a package manager service (package manager service, PMS), or a window manager service (window manager service) in the system_server process jointly build a basic platform capability. Alternatively, from an implementation perspective, in addition to the system_server process, the fast collaborative service may also be placed in another process. When the processor 310 integrates different components, for example, integrates a CPU and a GPU, the CPU and the GPU may cooperate to perform the method provided in embodiments of this application. For example, in the method provided in embodiments of this application, some algorithms are executed by the CPU, and the other algorithms are executed by the GPU, to obtain high processing efficiency.

In some embodiments, the processor 310 may include one or more interfaces. For example, the interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

The USB interface 330 is an interface that conforms to a USB standard specification, and may be specifically a mini USB interface, a micro USB interface, a USB Type C interface, or the like. The USB interface 330 may be configured to connect to a charger to charge the electronic device 300, or may be configured to transmit data between the electronic device 300 and a peripheral device. The charging management module 340 is configured to receive a charging input from the charger. The power management module 341 is configured to be connected to the battery 342, the charging management module 340, and the processor 310. The power management module 341 receives an input from the battery 342 and/or the charging management module 340, to supply power to the processor 310, the internal memory 321, an external memory, the display screen 394, the camera 393, the wireless communication module 360, and the like.

The I2C interface is a two-way synchronous serial bus, and includes one serial data line (serial data line, SDA) and one serial clock line (serial clock line, SCL). In some embodiments, the processor 310 may include a plurality of groups of I2C buses. The processor 310 may be separately coupled to the touch sensor 380K, a charger, a flash, the camera 393, and the like through different I2C bus interfaces. For example, the processor 310 may be coupled to the touch sensor 380K through the I2C interface, so that the processor 310 communicates with the touch sensor 380K through the I2C bus interface, to implement a touch function of the electronic device 300.

The mobile industry processor interface (mobile industry processor interface, MIPI) may be configured to connect the processor 310 to peripheral components such as the display screen 394 and the camera 393. The MIPI includes a camera serial interface (camera serial interface, CSI), a display serial interface (display serial interface, DSI), and the like. In some embodiments, the processor 310 communicates with the camera 393 through the CSI, to implement a photographing function of the electronic device 300. The processor 310 communicates with the display screen 394 through the DSI, to implement a display function of the electronic device 300.

The GPIO interface may be configured by using software. The GPIO interface may be configured as a control signal or a data signal. In some embodiments, the GPIO interface may be configured to connect the processor 310 to the camera 393, the display screen 394, the wireless communication module 360, the audio module 370, the sensor module 380, and the like. The GPIO interface may alternatively be configured as an I2C interface, an I2S interface, a UART interface, a MIPI, or the like.

A wireless communication function of the electronic device 300 may be implemented through the antenna 1, the antenna 2, the mobile communication module 350, the wireless communication module 360, the modem processor, the baseband processor, and the like. The antenna 1 and the antenna 2 are configured to transmit and receive an electromagnetic wave signal. Each antenna in the electronic device 300 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 350 may provide a wireless communication solution that is applied to the electronic device 300 and that includes 2G/3G/4G/5G. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit a processed electromagnetic wave to the modem processor for demodulation. The mobile communication module 350 may further amplify a signal modulated by the modem processor, and convert an amplified signal into an electromagnetic wave for radiation through the antenna 1. In some embodiments, at least some functional modules in the mobile communication module 350 may be disposed in the processor 310. In some embodiments, at least some functional modules in the mobile communication module 350 may be disposed in a same device as at least some modules in the processor 310.

The wireless communication module 360 may provide a wireless communication solution that is applied to the electronic device 300, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 360 may be one or more components integrating at least one communication processing module. The wireless communication module 360 receives an electromagnetic wave through the antenna 2, performs frequency modulation and filtering processing on the electromagnetic wave signal, and sends a processed signal to the processor 310. The wireless communication module 360 may further receive a to-be-sent signal from the processor 310, perform frequency modulation and amplification on the signal, and convert a processed signal into an electromagnetic wave for radiation through the antenna 2.

In some embodiments, in the electronic device 300, the antenna 1 and the mobile communication module 350 are coupled, and the antenna 2 and the wireless communication module 360 are coupled, so that the electronic device 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

It may be understood that an interface connection relationship between the modules illustrated in this embodiment of this application is merely an example for description, and does not constitute a limitation on the structure of the electronic device 300. In some other embodiments of this application, the electronic device 300 may alternatively use an interface connection manner different from that in the foregoing embodiment, or a combination of a plurality of interface connection manners.

The electronic device 300 implements a display function by using the GPU, the display screen 394, the application processor, and the like. The GPU is a microprocessor for image processing, and is connected to the display screen 394 and the application processor. The GPU is configured to perform mathematical and geometrical calculation, and is configured to render an image. The processor 310 may include one or more GPUs that execute program instructions to generate or change display information.

The display screen 394 is configured to display an image, a video, and the like. The display screen 394 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like.

The electronic device 300 may implement a photographing function, or implement an image capturing function by using the ISP, the camera 393, the video codec, the GPU, the display screen 394, the application processor, or the like.

The ISP is configured to process data fed back by the camera 393. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 393.

The camera 393 is configured to capture a static image or a video. An optical image of an object is generated through the lens, and is projected onto the light-sensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 300 may include one or N cameras 393, where N is a positive integer greater than 1.

The digital signal processor is configured to process a digital signal, and may process another digital signal in addition to the digital image signal. For example, when the electronic device 300 selects a frequency, the digital signal processor is configured to perform Fourier transform on frequency energy.

The video codec is configured to compress or decompress a digital video. The electronic device 300 may support one or more video codecs. In this way, the electronic device 300 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU may be used to implement applications such as intelligent cognition of the electronic device 300, for example, image recognition, facial recognition, speech recognition, and text understanding.

The internal memory 321 may be configured to store computer-executable program code, and the computer-executable program code includes instructions. The internal memory 321 may include a program storage area and a data storage area. The program storage area may store an operating system, an application required by at least one function (for example, a voice playing function or an image playing function), and the like. The data storage area may store data (for example, audio data or a phone book) created in a process of using the electronic device 300. In addition, the internal memory 321 may include a high-speed random access memory, and may further include a non-volatile memory, for example, at least one magnetic disk storage device, a flash memory, or a universal flash storage (universal flash storage, UFS). The processor 310 runs the instructions stored in the internal memory 321 and/or the instructions stored in the memory disposed in the processor, to perform various function applications of the electronic device 300 and data processing.

The external memory interface 320 may be configured to connect to an external memory card, for example, a micro SD card, to expand a storage capability of the electronic device. The external memory card communicates with the processor 310 through the external memory interface 320, to implement a data storage function. For example, files such as pictures or videos are stored in the external memory card.

The electronic device 300 may implement an audio function, for example, music playing and recording, by using the audio module 370, the speaker 370A, the receiver 370B, the microphone 370C, the headset interface 370D, the application processor, and the like.

The button 390 includes a power button, a volume button, and the like. The button 390 may be a mechanical button, or may be a touch button. The electronic device 300 may receive a button input, and generate a button signal input related to user setting and function control of the electronic device 300. The motor 391 may generate a vibration prompt. The motor 391 may be configured to provide an incoming call vibration prompt and a touch vibration feedback. For example, touch operations performed on different applications (for example, photographing and audio playing) may correspond to different vibration feedback effects. A touch vibration feedback effect may be further customized. The indicator 392 may be an indicator light, and may be configured to indicate a charging status and a power change, or may be configured to indicate a message, a missed call, a notification, and the like. The SIM card interface 395 is configured to connect to a SIM card. The SIM card may be inserted into the SIM card interface 395, or removed from the SIM card interface 395, to implement contact with or separation from the electronic device 300.

It can be understood that the components shown in FIG. 3 do not constitute a specific limitation on the electronic device 300. A mobile phone may further include more or fewer components than those shown in the figure, or combine some components, or split some components, or have different component arrangements. In addition, a combination/connection relationship between the components in FIG. 3 may also be adjusted and modified.

An embodiment of this application provides a plurality of devices. The plurality of devices may be same devices, for example, the electronic devices 300. Alternatively, the plurality of devices may be different devices. For example, some of the plurality of devices are the electronic devices 300, and some are displays. An implementation of the plurality of devices is not limited in this embodiment of this application. For example, all the plurality of devices may be electronic devices, the plurality of devices may be chips in electronic devices, or some of the plurality of devices are electronic devices, and some are chips in electronic devices.

Correspondingly, an embodiment of this application further provides a distributed system. The distributed system may include at least two of a plurality of devices. Certainly, the distributed system may further include another device. Any devices in the distributed system can perform multi-screen collaboration, information sharing, and the like.

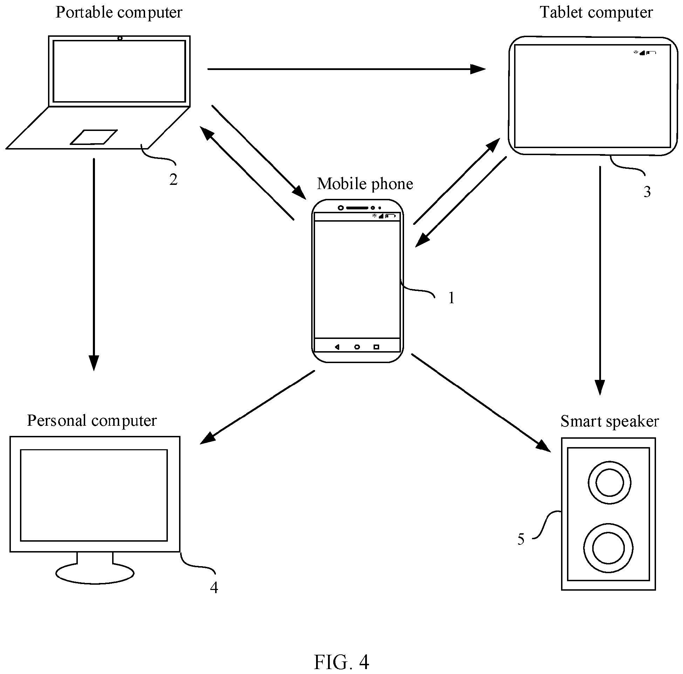

FIG. 4 is a schematic diagram of the distributed system. In FIG. 4, an example in which the distributed system includes five devices is used. It should be understood that the five devices are located in a same network. The five devices are a device 1, a device 2, a device 3, a device 4, and a device 5. Multi-screen collaboration, information sharing, or the like may be performed between the device 1, the device 2, the device 3, the device 4, and the device 5. For example, the device 1 may perform multi-screen collaboration or information sharing with the device 2 or the device 3, the device 2 and the device 4 may perform multi-screen collaboration, and the device 3 and the device 5 may perform information sharing. For ease of understanding, in the following introduction process, for example, the device 1 is a mobile phone, the device 2 is a portable computer, the device 3 is a tablet computer, the device 4 is a personal computer, and the device 5 is a smart speaker. A structure of the mobile phone is, for example, the structure shown in FIG. 3. The portable computer, the tablet computer, the personal computer, and the smart speaker may include more or fewer components than those in the structure shown in FIG. 3.

It should be understood that a connection needs to be established before a distributed service, for example, multi-screen collaboration or information sharing, is performed between the device 1, the device 2, the device 3, the device 4, and the device 5. In other words, before performing multi-screen collaboration or information sharing, any device needs to be connected to another possible device, that is, a plurality of devices are interconnected.

In this embodiment of this application, roles of the plurality of interconnected devices are equivalent, and a distributed service is not limited to the roles of the devices.

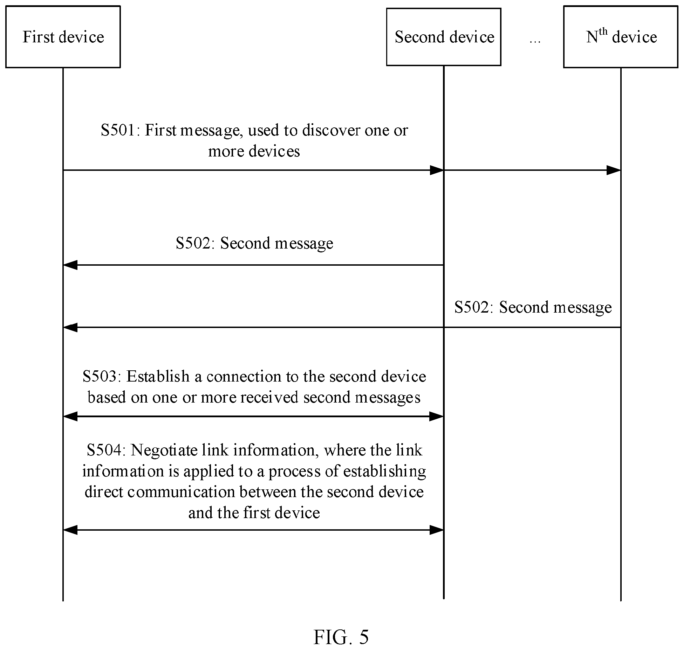

The following describes the technical solutions provided in embodiments of this application with reference to the accompanying drawings. FIG. 5 shows a multi-device connection establishment procedure according to an embodiment of this application. In the following description process, an example in which the method is applied to the network architecture shown in FIG. 4 is used. It should be understood that the method relates to a plurality of devices, for example, the devices in FIG. 4. For ease of description, in the following description, the method relates to a first device and a plurality of devices. The first device may be a device that needs to perform a distributed service, and the plurality of devices include, for example, a second device, a third device, or even a fourth device. It should be understood that, before the first device needs to perform a distributed service device, the first device needs to establish a connection to one or more devices around the first device, that is, networking, to collaborate with the one or more devices in a network to perform the distributed service. For example, the first device is the mobile phone in FIG. 4. When needing multi-screen collaboration, the mobile phone may request to establish a connection to the personal computer and/or the tablet computer in FIG. 4, so that the mobile phone and the personal computer may perform a multi-screen collaboration service. The first device may be any device in FIG. 4, and the plurality of devices may also be any devices in FIG. 4. For any device, before a distributed service needs to be performed, a process in which the device establishes a connection to another device is similar. Therefore, in the following description process, an example in which the first device establishes a connection to the second device is used. It should be understood that a process in which the second device establishes a connection to the first device is similar.

S501: The first device broadcasts a first message, where the first message is used to discover one or more devices.

Some applications, for example, a distributed service may need multi-device collaborative work, so that a user has better experience when using these applications. For example, in a possible scenario, the first device is a mobile phone, and to facilitate file query, a file needs to be shared with another device, for example, a PC. The mobile phone may perform projection onto the PC, so that the file on the mobile phone may be opened on the PC. For example, when the mobile phone and the PC perform multi-screen collaboration, a mirror of the mobile phone is displayed on a display screen of the PC, and the mirror of the mobile phone displayed on the PC may also be understood as a projection interface. The user performs an operation on the projection interface on the PC. For example, the user selects to open a file A, and the PC may start the file A, but actually the file A is a file on the mobile phone. Compared with the mobile phone, the PC has a display screen of a larger area. The user can view the file on the PC, to improve a viewing effect of the user.

However, to support the distributed service, a plurality of devices, such as a mobile phone, a tablet computer, a PC, and a display screen, need to be connected, that is, a plurality of devices are interconnected. Therefore, before performing the distributed service, the first device needs to establish a connection to the one or more devices, that is, networking, to collaborate with the one or more devices in a network to perform the distributed service. For ease of description, the following uses an example in which the first device needs to perform a projection service with another device.

Before the first device performs the projection service, the first device may search for one or more devices nearby the first device. For example, the first device may broadcast the first message for discovering the one or more devices. Any device nearby the first device, for example, the second device, may respond to the first message after receiving the first message, to notify the first device of existence of the second device. Subsequently, the first device establishes a connection to the second device. For another example, after receiving the first message, the third device nearby the first device may respond to the first message, to notify the first device of existence of the third device. Subsequently, the first device establishes a connection to the third device. Certainly, before the second device performs a service, for example, a projection service or a file sharing service, the second device may also search for one or more devices nearby the second device, and establish a connection to a found device.

It should be noted that a specific name of the first message is not limited in this embodiment of this application. For example, the first message may alternatively be referred to as a discovery message, a detection message, or a device discovery message. A specific implementation of the first message is not limited in this embodiment of this application.

For example, the first message may be generated based on a Wi-Fi protocol, that is, devices discover each other based on Wi-Fi scanning. This manner is applicable to a device that does not have Bluetooth and is insensitive to power consumption, for example, a router and an internet of things (Internet of Things, IoT) device. In this manner, the first device may allocate some discovery windows (Discovery Windows, DWs), and the first device may broadcast the first message in the DW. Any device (for example, N devices) nearby the first device may listen to the first message. The second device is used as an example. If the second device receives the first message, the second device may send a response message for the first message to the first device, to notify the first device of existence of the second device.

For example, the first message may be generated based on a Bluetooth communication protocol, that is, devices discover each other through Bluetooth scanning. For example, the first device broadcasts the first message, and any device (for example, N devices) nearby the first device may listen to the first message. The second device is used as an example. If the second device receives the first message, the second device may send a response message for the first message to the first device, to notify the first device of existence of the second device.

The first message may include related information of the first device, and is used to perform authentication on the first device. For example, the related information of the first device may include a device identifier (identity, ID) of the first device, an IP address, identity information of the first device, for example, an ID of a manufacturer of the first device, a MAC address of the first device, a device name of the first device, or other possible information. The first message may further include related information of a service performed by the first device, for example, includes a service type, namely, a projection type, so that a device nearby the first device knows that the service to be performed by the first device is a projection service. The following describes a process in which the first device discovers the second device based on Bluetooth scanning and establishes a connection to the second device.

S502: The second device sends a second message to the first device, and correspondingly, the first device receives the second message, where the second message is the response message for the first message.

Any device nearby the first device may listen to the first message. The second device is used as an example. If the second device receives the first message, the second device may send the second message to the first device, to notify the first device of existence of the second device. The third device is used as an example. If the third device receives the first message, the third device may send the second message to the first device, to notify the first device of existence of the third device. It should be noted that a specific name of the second message is not limited in this embodiment of this application. For example, the second message may alternatively be referred to as a discovery response message, a detection response message, or a device discovery response message.

It should be understood that if the first message is generated based on the Bluetooth protocol, the second message is also generated based on the Bluetooth protocol. After receiving the first message, the second device may perform authentication on the first device based on first information carried in the first message. The second device is used as an example. For example, the second device may perform authentication on the first device based on manual authentication. To be specific, after receiving the first message, the second device may output a prompt interface. The prompt interface displays authentication information of the first device, for example, a device name. The user may input the authentication information of the first device to the prompt interface, to complete authentication on the first device. For another example, the second device may perform authentication on the first device based on automatic authentication. To be specific, the second device may obtain the identity information of the first device carried in the first message, for example, the ID of the manufacturer of the first device, determine whether the identity information is in a trusted list, and complete authentication on the first device. The trusted list may be considered a list of IDs of manufacturers of devices that are allowed to connect.

After the authentication on the first device by the second device succeeds, the second device sends the second message to the first device. It should be understood that, if the first message is generated based on the Bluetooth protocol, the second message is sent to the first device through a Bluetooth broadcast channel. The second message may carry second information, and the second information may be used to determine whether the second device can support the distributed service to be performed by the first device. For example, the second information includes service capability information of the second device. The service capability information includes a service type list, and the service type list indicates a plurality of services supported by the second device. The service capability information may further include one or more of a Wi-Fi encryption type, channel information, MAC address information, protocol version information, multi-input multi-output (multi-input multi-output, MIMO) information of a device, and the like. Certainly, the second message further includes a device ID, an IP address, and the like of the second device. The first device may determine, based on the second information, whether to establish the connection to the second device. If the second information indicates that a service capability of the second device can support the distributed service to be performed by the first device, the first device chooses to establish the connection to the second device. On the contrary, if the second information indicates that a service capability of the second device cannot support the distributed service to be performed by the first device, the first device may choose not to establish the connection to the second device.

The second message is the response message for the first message, and a specific implementation of the second message varies based on different first messages. An example in which the first device performs the projection service is used. In some embodiments, the first message may include the related information of the first device. In this case, the first message is used to discover a plurality of devices nearby the first device. The second message sent by the device nearby the first device, for example, the second device, to the first device may include the service capability information, for example, a plurality of service types supported by the second device. The first device may determine, based on a plurality of services supported by the second message, whether the second device supports the projection service of the first device.

In some other embodiments, the first message may include the related information of the first device and service information, for example, a projection type. In this case, the first message may be used to discover a device that supports the projection service nearby the first device. The second message sent by the device nearby the first device, for example, the second device, to the first device may also include the service capability information, for example, a plurality of service types supported by the second device. The first device may determine, based on a plurality of services supported by the second message, whether the second device supports the projection service. Alternatively, after a plurality of devices nearby the first device receive the first message, a device that is in the plurality of devices and that supports the projection service, for example, the second device, sends the second message to the first device, where the second message includes related information of the second device and a service type supported by the second device, for example, a projection type. After receiving the second message, the first device may determine that the second device corresponding to the second message supports the projection service. Alternatively, after a plurality of devices nearby the first device receive the first message, the plurality of devices separately send the second message to the first device. The second message sent by a device supporting the projection service indicates that the device supports the projection service to be performed by the first device, and the second message sent by a device not supporting the projection service indicates that the device does not support the projection service to be performed by the first device. Certainly, after the plurality of devices nearby the first device receive the first message, a device that is in the plurality of devices and that supports the projection service sends the second message to the first device, and a device that does not support the projection service may not send the second message to the first device. In this case, after receiving the second message, the first device may consider by default that the device sending the second message supports the projection service.

It should be understood that if the first message is generated based on the Wi-Fi protocol, the second message may be a timing notification frame (timing notification frame, PNF). To be specific, after receiving the first message, a device (for example, the second device) nearby the first device sends a PNF to the first device. The PNF may carry the related information and service capability information of the second device. Alternatively, the PNF indicates whether the second device supports the projection service.

It should be understood that the first device may receive second messages for the first message respectively sent by the plurality of devices (for example, the second device and an N^{th} device), and the first device may determine, based on the plurality of received second messages, one or more devices that can support the distributed service to be performed by the first device. In the following description, an example in which the second device can support the distributed service to be performed by the first device is used. Similarly, after authentication on the first device by the third device succeeds, the third device sends the second message to the first device. The first device may determine, based on second information in the second message, whether to establish a connection to the third device.

S503: The first device determines, based on the one or more received second messages, to establish a connection to the one or more devices.

The first device may determine, based on second information carried in the second messages from the devices, one device or more devices that are of the devices and that support the distributed service to be performed by the first device. After determining the one or more devices that support the distributed service to be performed by the first device, the first device establishes the connection to the one or more devices.

An example in which the one or more devices include the second device is used. When the first device needs to establish the connection to the second device, the first device may establish a socket, to send a Bluetooth connection request (or referred to as a Bluetooth packet) to the second device through the socket, to request to establish a Bluetooth communication connection to the second device. When listening to the first message, the second device also establishes a socket, and may listen to the Bluetooth connection request from the first device through the socket. If the second device listens to the Bluetooth connection request from the mobile phone, the second device establishes the Bluetooth communication connection to the first device in response to the Bluetooth connection request from the first device. Similarly, a process in which the first device establishes the connection to the third device is similar to the process in which the first device establishes the connection to the second device. Details are not described herein again.

S504: The first device negotiates link information with the one or more devices, where the link information is applied to a process of establishing a Wi-Fi direct communication between the one or more devices and the first device.

For example, the device that supports the distributed service to be performed by the first device includes the second device. After the first device establishes the Bluetooth connection to the second device, the first device and the second device may mutually negotiate some information used to establish Wi-Fi direct communication between the first device and the second device, for example, including channel information, an established link type, and a pre-shared key (pre-shared key, PSK). For example, the first device sends the channel information, the established link type, the PSK, and the like to the second device through a Bluetooth channel between the first device and the second device, so that the second device establishes Wi-Fi direct communication with the first device based on the information. It should be understood that, if the device that supports the distributed service to be performed by the first device further includes the third device, after the first device establishes the Bluetooth connection to the third device, the first device and the third device may also mutually negotiate some information about Wi-Fi direct communication, so that the third device establishes Wi-Fi direct communication with the first device based on the information.

By analogy, any device nearby the first device that listens to the first message from the first device may feed back a response message for the first message, namely, the second message, to the first device. The first device selects, based on the one or more received second messages, one or more devices capable of supporting a distributed application to be performed by the first device, and establishes a Bluetooth connection to the one or more devices. Then, the first device may negotiate link information with each device, and establish Wi-Fi direct communication with each device, to form a distributed system.

It should be noted that, in the foregoing description, the first device is a device that needs to perform the projection service. Before performing the service, the first device broadcasts the first message, to discover a device that supports the projection service nearby the first device, for example, the second device. If the second device supports the projection service, the first device establishes the connection to the second device. It should be understood that, if the second device needs to perform the file sharing service, the second device also broadcasts a first message, to discover a device that supports the file sharing service nearby the second device. If the device that supports the file sharing service nearby the second device includes the first device, the second device establishes a connection to the first device. Certainly, if the first device has established the connection to the second device, the first device is used to implement the projection service. Subsequently, when the second device performs the file sharing service and finds that the first device supports the file sharing service, the second device may directly perform the file sharing service with the first device without re-establishing the connection to the first device.

In the procedure shown in FIG. 5, an example in which the first device is a device that needs to perform the distributed service is used. If the second device is a device that needs to perform the distributed service, the second device implements networking with the first device and a plurality of other devices according to the procedure shown in FIG. 5. Similarly, if the third device is a device that needs to perform the distributed service, the second device implements networking with the first device, the second device, and a plurality of other devices according to the procedure shown in FIG. 5. In other words, in this embodiment of this application, devices establish a communication channel based on discovery between the devices, and then negotiate, through the communication channel established between the devices, link information for establishing Wi-Fi direct communication between the devices. There is no need to allocate specific roles to the devices. Therefore, the roles of the devices in the established distributed system are equivalent, and the distributed service can be collaborated between any devices. Compared with multi-device interconnection implemented based on a Wi-Fi P2P protocol, in the multi-device connection establishment method provided in this embodiment of this application, the distributed service is not limited to the roles of the devices. For example, the first device, the second device, and the third device are interconnected based on the Wi-Fi P2P protocol, where only one of the first device, the second device, and the third device is a GO, and the other two devices are GCs. For example, the first device is the GO, and the second device and the third device are the GCs. The first device may perform projection onto the second device, but at the same time, the second device cannot share information with the third device. However, the first device, the second device, and the third device are interconnected by using the method provided in this embodiment of this application. Roles of the first device, the second device, and the third device are equivalent. The first device may perform projection onto the second device, and the second device and the third device may share a file with each other.

In addition, devices discover each other based on Bluetooth to establish Wi-Fi direct communication, and the first message may be broadcast based on Bluetooth when another device needs to be discovered. Compared with that each device broadcasts respective information in a DW, each device does not need to wait for the DW to broadcast the respective information in the DW. This reduces a device discovery delay, that is, reduces a link establishment delay of each device. In addition, when waiting for the DW to broadcast the respective information of the device, a screen of the device is usually screen-on. Therefore, that devices discover each other based on Bluetooth to establish Wi-Fi direct communication can further reduce power consumption of each device.

The first device is used as an example. After networking with a plurality of devices, the first device may collaborate with any device in a network for a distributed application. This requires time synchronization between the devices in the distributed system. Therefore, after establishing Wi-Fi direct communication, the plurality of devices need to perform time synchronization. Because the roles of the devices in the distributed system established in this embodiment of this application are equivalent, before time synchronization is performed, one device may be selected from the plurality of devices in the distributed system as a primary device, and time of the other devices is synchronized based on time of the primary device. Compared with the primary device, the other devices in the distributed system may be considered as secondary devices, and the secondary devices may perform synchronization based on the time of the primary device.

In a possible implementation, priority ranking may be performed on the plurality of devices in the distributed system, and a device with a highest priority is used as the primary device. If a collection of all the devices in the distributed system is referred to as a domain, a device with a highest priority in the domain is the primary device. A priority determining manner is not limited in this embodiment of this application.

In an example, the priority of the device may be determined based on one or more of a device type of each device, an endurance capability of the device, a hardware capability of the device, a protocol version used by the device, a quantity of devices connected to the device, and a MAC address of the device. The device type is, for example, a display, a PC, a tablet computer, a mobile phone, an IoT device, a smart speaker, or a wearable device. The endurance capability of the device is, for example, a remaining power level of the device, for example, a high power level, a medium power level, a medium-low power level, or a low power level. It should be noted that a quantity of remaining power levels is not limited in this embodiment of this application, and each remaining power level may be defined in advance. For example, if remaining power is greater than or equal to 70% of total power, the level of the remaining power is the high power level. If remaining power is greater than or equal to 50% of total power and less than 70% of the total power, the level of the remaining power is the medium power level. If remaining power is greater than or equal to 30% of total power and less than 50% of the total power, the level of the remaining power is the medium-low power level. If remaining power is less than 30% of total power, the level of the remaining power is the low power level. For the hardware capability of the device, for example, the device uses dual Wi-Fi chips or a single Wi-Fi chip. It should be noted that the device type, the endurance capability of the device, the hardware capability of the device, and the like are merely examples for description. Specific representation forms of the device type, the endurance capability of the device, and the hardware capability of the device are not limited in this embodiment of this application.

Each device may report own priority information. For example, each device may report a ranking priority (ranking priority, RP) value of the device. The RP value may indicate the priority information of each device. If the devices discover each other based on Bluetooth, the RP value may be carried in the first message. If the devices discover each other based on Wi-Fi, that is, the first message is generated based on the Wi-Fi protocol, the RP value may be carried in a synchronization beacon frame sent by the device. The RP value may occupy one field, or may occupy a plurality of fields. This is not limited in this embodiment of this application. For example, content indicated by the RP value may occupy different bits in a same field. Alternatively, content indicated by the RP value may occupy different fields.

For example, the RP value may include two parts. One part indicates a ranking level (ranking level), and the other part indicates a MAC address of a device. The ranking level may include a device level, a protocol version number of a device, and a quantity of devices connected to the device. The device level includes a device type, an endurance capability of a device, and a hardware capability of the device.

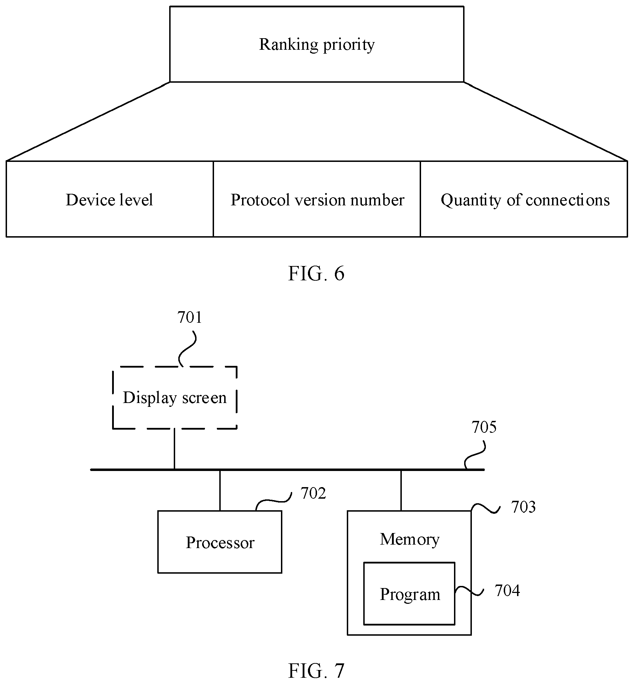

For example, FIG. 6 shows a frame structure of the first part that carries an RP value. In other words, a ranking level field includes three fields: a device level field, a protocol version number field, and a quantity of connections field. It should be noted that specific names of the three fields are not limited in this embodiment of this application. A quantity of bits occupied by each field is not limited in this embodiment of this application. For example, for a definition of the device level field, refer to Table 1.

**Table 1**

| Field | Type | Value |
|---|---|---|
| 5 to 7 bits | Device type | 6: Display |
| | | 5: PC |
| | | 4: Tablet computer |
| | | 3: Mobile phone |
| | | 2: IoT device |
| | | 1: Speaker |
| | | 0: Wearable device |
| 2 to 4 bits | Endurance capability of a device | 3: High power level (the power level is greater than or equal to 70%) |
| | | 2: Medium power level (the power level is greater than or equal to 50% and less than 70%) |
| | | 1: Medium-low power level (the power level is greater than or equal to 30% and less than 50%) |
| | | 0: Low power level (the power level is less than 30%) |
| 0 to 1 bit | Hardware capability of a device | 1: Dual Wi-Fi chips |
| | | 0: Single Wi-Fi chip |

In this embodiment of this application, based on an RP value reported by each device, a priority of the device may be determined based on the priority information of the device, for example, a device type, an endurance capability of the device, a hardware capability of the device, a protocol version used by the device, a quantity of devices connected to the device, and a MAC address of the device. Because each device determines the priority of the device based on PR values of all devices in the system, priorities of all the devices determined by each device in the system are consistent. In some embodiments, based on a device type of each device, a priority of the device may be preferably determined. If it is determined, based on the device type of each device, that the priorities of the devices are consistent, the priority of the device may be further determined based on an endurance capability of the device, and so on, until the priorities of the devices are determined. For example, the following operations may be performed in sequence: (1) compare types of the devices, where a device with a higher type is the primary device, and if the types of the devices are the same, (2) is performed; (2) compare endurance capabilities of the devices, where a device with a higher endurance capability is the primary device, and if the endurance capabilities of the devices are the same, (3) is performed; (3) compare hardware capabilities of the devices, where a device with a higher hardware capability is the primary device, and if the hardware capabilities of the devices are the same, (4) is performed; (4) compare protocol versions of the devices, where a device with a higher version number is the primary device, and if version numbers of the devices are the same, (5) is performed; (5) compare quantities of devices connected to the devices, where a device with a greater quantity of connections is the primary device, and if the quantities of devices connected to the devices are the same, (6) is performed; and (6) compare MAC addresses of the devices by bit, where a device with a higher MAC address is the primary device.

After the primary device is selected from the distributed system, the secondary device may perform synchronization based on the time of the primary device. Synchronization manners include but are not limited to the following two manners.

Synchronization manner 1: passive time synchronization, that is, the primary device actively notifies the time, and the secondary device performs synchronization based on the time of the primary device.

For example, the primary device may periodically send a time synchronization frame, and the time synchronization frame may carry time information used for time synchronization. For example, the time synchronization frame may be an 802.11 beacon frame, and carries time information of a timer synchronization function (timer synchronization function, TSF) and a BSSID of the distributed system. It should be understood that the BSSID is used to distinguish between different networks. Because the 802.11 beacon frame is used as the time synchronization frame, a TSF of the 802.11 beacon frame may be used, so that hardware clock synchronization at an error level of 10 µs can be implemented, and a synchronization time between devices can be shortened as much as possible. Any secondary device receives the time synchronization frame from the primary device, and may obtain a BSSID carried in the time synchronization frame. If the obtained BSSID is the same as a BSSID of the secondary device, it may be considered that the time synchronization frame is sent by the primary device located in a same network, and synchronization with the primary device may be implemented based on the time synchronization frame. For example, if the secondary device determines that the obtained BSSID is the same as the BSSID of the secondary device, the secondary device may refresh a TSF counter, to implement time synchronization with the primary device.

Synchronization mode 2: active time synchronization, that is, the secondary device actively applies for time synchronization. The secondary device actively applies for time synchronization and does not need to wait for the primary device to send a time synchronization frame. Therefore, the secondary device can complete synchronization with the primary device in advance, to reduce a synchronization delay.

For example, the secondary device that needs to apply for time synchronization is a first secondary device. The first secondary device may actively broadcast a time synchronization request message, for example, a sync_request action signaling frame, to request time synchronization from a device that has completed time synchronization in a same network. After receiving the time synchronization request message, the primary device or another secondary device may send a response message for the time synchronization request message to the first secondary device, for example, a sync_response action signaling frame. The response message may carry TSF time information of the primary device or the another secondary device and a time domain (social slot) location for sending the information. The social slot location may be considered as a timeslot location for interaction when all devices in a near field discover each other, and is used to discover the devices in the near field. After receiving the response message, the first secondary device may complete time pre-synchronization based on the TSF time information carried in the response message, that is, align with the TSF time information of the primary device. In this case, the first secondary device may not discover another secondary device in the network. It should be understood that each device maintains TSF time information based on a local timer. However, there is a delay in sending information by the device. Therefore, the first secondary device may further listen to, in a social slot, an action signaling frame from the primary device or another secondary device, to complete final synchronization based on time information carried in the action signaling frame.

The procedure shown in FIG. 5 above shows a process in which a plurality of devices establish a connection for the first time. In a possible scenario, the plurality of devices have been interconnected, that is, the plurality of devices have been networked. However, there is another device that needs to be networked. For example, the first device, the second device, and the third device have established connections, and are located in a same network. There is a fourth device in a near field of the first device, the second device, and the third device, and the fourth device has a distributed service that needs to be performed. In this scenario, the fourth device performs the procedure shown in FIG. 5, to establish connections to the first device, the second device, and the third device. To be specific, the fourth device broadcasts a first message, and any one of the first device, the second device, and the third device receives the first message, and sends a second message to the fourth device. If the first device, the second device, and the third device all receive the first message, the first device, the second device, and the third device separately send the second message to the fourth device. The fourth device may determine, based on the second messages from the first device, the second device, and the third device, devices that support the distributed service to be performed by the fourth device. If the first device, the second device, and the third device all support the distributed service to be performed by the fourth device, the fourth device may request to establish a connection to the first device, the second device, or the third device, and access the network in which the first device, the second device, and the third device are located. If some of the first device, the second device, and the third device support the distributed service to be performed by the fourth device, the fourth device may request to establish a connection to the some devices, and join a system in which the first device, the second device, and the third device are located. It should be understood that the fourth device joins the system in which networking has been completed. In this case, in a re-formed system, each device needs to re-determine a primary device of the system. It should be understood that, after joining the system, the fourth device needs to perform time synchronization with a device in the system. For example, the fourth device receives a time synchronization frame periodically sent by the primary device, and may perform time synchronization based on the time synchronization frame, that is, the fourth device may perform passive time synchronization. For another example, the fourth device may alternatively broadcast a time synchronization request message, that is, the fourth device may alternatively perform active time synchronization.

Based on the foregoing embodiments, an embodiment of this application further provides an electronic device. The electronic device is, for example, a mobile phone, a PAD, a portable computer, or a smart speaker. As shown in FIG. 7, the electronic device may include a display screen 701, one or more processors 702, and one or more memories 703 configured to store one or more programs 704. The foregoing components may be connected through one or more communication buses 705. The display screen 701 may be configured to display content of a file on the electronic device. Alternatively, the display screen 701 may be configured to display a desktop of the electronic device. Alternatively, the display screen 701 may be configured to display an image and the like.

When the one or more programs 704 stored in the memory 703 are executed by the one or more processors 702, the electronic device may be configured to perform the steps in the embodiment shown in FIG. 5 or another corresponding embodiment.

It should be noted that, in this embodiment of this application, division into the units is an example, and is merely a logical function division. During actual implementation, another division manner may be used. Functional units in embodiments of the present invention may be integrated into one processing unit, or each of the units may exist alone physically, or two or more units are integrated into one unit. For example, in the foregoing embodiment, a first obtaining unit and a second obtaining unit may be a same unit or different units. The integrated unit may be implemented in a form of hardware, may be implemented in a form of a software functional unit, or may be implemented in a form of a combination of hardware and a software functional unit.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used to implement embodiments, all or some of embodiments may be implemented in a form of a program product. The program product includes one or more computer instructions. When the program instructions are loaded and executed on a computer, the procedures or functions according to embodiments of this application are all or partially generated. The computer may be a general-purpose computer, a special-purpose computer, a computer network, or another programmable device. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

It is clearly that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. A multi-device connection establishment method, applied to a system comprising a plurality of devices, wherein the plurality of devices comprise a first device; and the method comprises:
sending, by a first device, a first message, wherein the first message is used to discover another device;
receiving, by the first device, one or more second messages from one or more devices, wherein the second message is a response message for the first message;
determining, by the first device based on the one or more second messages, to establish a connection to a second device in the one or more devices; and
negotiating, by the first device with the second device, link information used to establish direct communication between the first device and the second device, and establishing a direct communication connection to the second device based on the link information.

2. The method according to claim 1, wherein the second message comprises service capability information, the service capability information indicates whether a device can support a service to be performed by the first device, and the determining, by the first device based on the one or more second messages, to establish a connection to a second device comprises:
obtaining, by the first device, service capability information respectively carried in the one or more second messages;
determining, by the first device from the one or more devices based on the obtained service capability information, that a device that can support the service to be performed by the first device is the second device; and
determining, by the first device, to establish the connection to the second device.

3. The method according to claim 1 or 2, wherein the method further comprises:
sending, by the first device, a ranking priority RP of the first device, wherein the RP may indicate a priority of the first device and is used to determine a primary device in the system, and a device other than the primary device in the system is a secondary device; and
receiving, by the first device, a respective RP from the one or more devices, and determining the primary device based on the one or more received RPs.

4. The method according to claim 3, wherein the RP comprises a first part and a second part, the first part indicates identity information of the first device, the second part indicates priority information of the first device, and the priority information comprises one or more of the following types of information:
a device level, a protocol version number of a device, or a quantity of devices connected to a device, wherein the device level comprises one or more of a device type, an endurance capability of a device, and a hardware capability of a device.

5. The method according to claim 4, wherein the first device determines the primary device according to a preset rule and based on the one or more received RPs, wherein the preset rule meets:
if a device type of the first device is higher than a device type of the second device, the first device is a primary device, and the second device is a secondary device;
if a device type of the first device is the same as a device type of the second device, and an endurance capability of the first device is higher than an endurance capability of the second device, the first device is a primary device, and the second device is a secondary device;
if a device type of the first device is the same as a device type of the second device, an endurance capability of the first device is the same as an endurance capability of the second device, and a hardware capability of the first device is higher than a hardware capability of the second device, the first device is a primary device, and the second device is a secondary device;
if a device type of the first device is the same as a device type of the second device, an endurance capability of the first device is the same as an endurance capability of the second device, a hardware capability of the first device is the same as a hardware capability of the second device, and a protocol version of the first device is higher than a protocol version of the second device, the first device is a primary device, and the second device is a secondary device;
if a device type of the first device is the same as a device type of the second device, an endurance capability of the first device is the same as an endurance capability of the second device, a hardware capability of the first device is the same as a hardware capability of the second device, a protocol version of the first device is the same as a protocol version of the second device, and a quantity of devices connected to the first device is greater than a quantity of devices connected to the second device, the first device is a primary device, and the second device is a secondary device; or
if a device type of the first device is the same as a device type of the second device, an endurance capability of the first device is the same as an endurance capability of the second device, a hardware capability of the first device is the same as a hardware capability of the second device, a protocol version of the first device is the same as a protocol version of the second device, a quantity of devices connected to the first device is the same as a quantity of devices connected to the second device, and bit-wise comparison of MAC addresses shows that a MAC address of the first device is higher than a MAC address of the second device, the first device is a primary device, and the second device is a secondary device.

6. The method according to any one of claims 3 to 5, wherein the first device is the primary device, and the method further comprises:
periodically sending, by the first device, a time synchronization frame, wherein the time synchronization frame carries time information used for time synchronization between secondary devices and a basic service set identifier BSSID, and the BSSID indicates identity information of the system in which the plurality of devices are located.

7. The method according to any one of claims 3 to 6, wherein the first device is the secondary device, and the method further comprises:
broadcasting, by the first device, a time synchronization request message, wherein the time synchronization request message is used to request to perform time synchronization with a device that completes time synchronization in the system in which the plurality of devices are located;
receiving, by the first device, a response message from a third device, wherein the response message carries time information and a time domain location of the third device, and the time domain location indicates a time domain location of information exchanged in a mutual discovery process of the plurality of devices; and
completing, by the first device, time pre-synchronization based on the time information in the response message, and listening to, at the time domain location, an action signaling frame from the third device, to complete final synchronization.

8. An electronic device, wherein the electronic device comprises a memory, at least one processor coupled to the memory, and a transceiver; the memory is configured to store instructions, and the at least one processor is configured to execute the instructions; the transceiver is configured to: send a first message, and receive one or more second messages from one or more devices, wherein the first message is used to discover another device, and the second message is a response message for the first message; and
when the at least one processor executes the instructions, the electronic device performs the following steps: determining, based on the one or more second messages, to establish a connection to a second device in the one or more devices; and
negotiating, with the second device, link information used to establish direct communication between the electronic device and the second device, and establishing a direct communication connection to the second device based on the link information.

9. The electronic device according to claim 8, wherein the second message comprises service capability information, the service capability information indicates whether a device can support a service to be performed by the electronic device, and the processor is specifically configured to: obtain service capability information respectively carried in the one or more second messages;
determine, from the one or more devices based on the obtained service capability information, that a device that can support the service to be performed by the electronic device is the second device; and
determine to establish the connection to the second device.

10. The electronic device according to claim 8 or 9, wherein the transceiver is further configured to:
send a ranking priority RP of the electronic device, wherein the RP may indicate a priority of the electronic device and is used to determine a primary device in a system in which the electronic device is located, and a device other than the primary device in the system is a secondary device; and
receive a respective RP from the one or more devices, and determine the primary device based on the one or more received RPs.

11. The electronic device according to claim 10, wherein the RP comprises a first part and a second part, the first part indicates identity information of the electronic device, the second part indicates priority information of the electronic device, and the priority information comprises one or more of the following types of information:
a device level, a protocol version number of a device, or a quantity of devices connected to a device, wherein the device level comprises one or more of a device type, an endurance capability of a device, and a hardware capability of a device.

12. The electronic device according to claim 11, wherein the processor is specifically configured to determine the primary device according to a preset rule and based on the one or more received RPs, wherein the preset rule meets:
if a device type of the electronic device is higher than a device type of the second device, the electronic device is a primary device, and the second device is a secondary device;
if a device type of the electronic device is the same as a device type of the second device, and an endurance capability of the electronic device is higher than an endurance capability of the second device, the electronic device is a primary device, and the second device is a secondary device;
if a device type of the electronic device is the same as a device type of the second device, an endurance capability of the electronic device is the same as an endurance capability of the second device, and a hardware capability of the electronic device is higher than a hardware capability of the second device, the electronic device is a primary device, and the second device is a secondary device;
if a device type of the electronic device is the same as a device type of the second device, an endurance capability of the electronic device is the same as an endurance capability of the second device, a hardware capability of the electronic device is the same as a hardware capability of the second device, and a protocol version of the electronic device is higher than a protocol version of the second device, the electronic device is a primary device, and the second device is a secondary device;
if a device type of the electronic device is the same as a device type of the second device, an endurance capability of the electronic device is the same as an endurance capability of the second device, a hardware capability of the electronic device is the same as a hardware capability of the second device, a protocol version of the electronic device is the same as a protocol version of the second device, and a quantity of devices connected to the electronic device is greater than a quantity of devices connected to the second device, the electronic device is a primary device, and the second device is a secondary device; or
if a device type of the electronic device is the same as a device type of the second device, an endurance capability of the electronic device is the same as an endurance capability of the second device, a hardware capability of the electronic device is the same as a hardware capability of the second device, a protocol version of the electronic device is the same as a protocol version of the second device, a quantity of devices connected to the electronic device is the same as a quantity of devices connected to the second device, and bit-wise comparison of MAC addresses shows that a MAC address of the electronic device is higher than a MAC address of the second device, the electronic device is a primary device, and the second device is a secondary device.

13. The electronic device according to any one of claims 10 to 12, wherein the electronic device is the primary device, and the transceiver is further configured to:
periodically send a time synchronization frame, wherein the time synchronization frame carries time information used for time synchronization between secondary devices and a basic service set identifier BSSID, and the BSSID indicates identity information of a system in which the plurality of devices are located.

14. The electronic device according to any one of claims 10 to 13, wherein the electronic device is the secondary device, and the transceiver is further configured to:
broadcast a time synchronization request message, wherein the time synchronization request message is used to request to perform time synchronization with a device that completes time synchronization in the system in which the plurality of devices are located;
receive a response message from a third device, wherein the response message carries time information and a time domain location of the third device, and the time domain location indicates a time domain location of information exchanged in a mutual discovery process of the plurality of devices; and
complete time pre-synchronization based on the time information in the response message, and listen to, at the time domain location, an action signaling frame from the third device, to complete final synchronization.

15. A distributed system, comprising a plurality of the electronic devices according to any one of claims 8 to 14.

16. A chip, wherein the chip comprises a processor and an interface, the interface is configured to communicate with the processor and receive information from another device, and the processor is configured to perform the method according to any one of claims 1 to 7.

17. A computer-readable storage medium, wherein the computer-readable storage medium stores computer-executable instructions, and when the computer-executable instructions are invoked by an electronic device, the electronic device is enabled to perform the method according to any one of claims 1 to 7.
